# EUROPÄISCHE PATENTSCHRIFT

(11) **EP 1 579 982 B1**
(45) Veröffentlichungstag und Bekanntmachung des Hinweises auf die Patenterteilung: **30.04.2008**
(21) Anmeldenummer: 04006839.7
(22) Anmeldetag: 22.03.2004
(51) Int. Cl.: B29C 65/48, C08J 5/12

(54) **Verfahren zum flächigen Quellschweissen eines Kunststoffkörpers mit einem weiteren Körper**
Method for surface solvent welding of a plastic part to another part
Procédé pour souder au solvant en surface une pièce plastique avec une autre pièce

(43) Veröffentlichungstag der Anmeldung: 28.09.2005
(60) Teilanmeldung: 07022772.3
(73) Patentinhaber: ibidi GmbH, 80799 München (DE)
(72) Erfinder: Kahl, Johan-Valentin, 80636 München (DE); Zantl, Roman, 85598 Baldham (DE)
(74) Vertreter: Grünecker, Kinkeldey, Stockmair & Schwanhäusser Anwaltssozietät

(56) Entgegenhaltungen:
- DE-A- 10 130 428
- DE-A- 19 851 644
- US-A1- 2003 083 686
- PATENT ABSTRACTS OF JAPAN Bd. 1996, Nr. 09, 30. September 1996 (1996-09-30) -& JP 08 118661 A (FUJI ELECTRIC CO LTD), 14. Mai 1996 (1996-05-14)

## Beschreibung

Die Erfindung betrifft ein Verfahren zum flächigen Verbinden eines Kunststoffkörpers mit einem weiteren Körper, insbesondere aus dem selben Kunststoff.

Insbesondere im Bereich von Mikroskop- und Mikrofluiduntersuchungen werden Trägersysteme verwendet, bei denen beispielsweise Flüssigkeitsreservoire auf Objektträgem aus Glas oder Kunststoff angeordnet werden oder Substrate aus Glas oder Kunststoff mit mikrostrukturierten Fluidsystemen mit Platten oder Folien abgedeckt werden. Während einer Untersuchung befindet sich beispielsweise eine Flüssigkeit mit den zu untersuchenden Partikeln (beispielsweise Moleküle, insbesondere Makromoleküle) in einem Flüssigkeitsreservoir oder einem Mikrofluidkanal, wo sie insbesondere mit optischen Verfahren Analysen durchgeführt werden können.

Für das Verbinden der verschiedenen Komponenten der Trägersysteme (bspw. Substrat und Abdeckfolie) sind verschiedene Methoden bekannt. Beispielsweise können zwei Komponenten mit einem aushärtenden Klebstoff verbunden werden. Alternativ können auch zwei Komponenten gegeneinander gepresst und dann ultraschallverschweißt werden.

Aus der JP 08-118661 ist ein Verfahren bekannt, bei dem zwei Platten eines Kunstsfoffs durch Aussetzen einem Lösungsmitteldampfs verbunden werden.

Aus der DE 101 30 428 ist ein Verfahren zum flächenartigen Verbinden von Körpern, von denen mindestens ein Körper aus Kunststoff besteht, bekannt. Bei diesem Verfahren wird ein quellmitteldampfhaltiges Gas einem Flüssigkeitsbehälter entnommen und durch einen Vorkühler in eine Bedampfungskammer geleitet, in der der eine Körper aus Kunststoff dem Gas ausgesetzt wird. Anschließend wird der oberflächlich angequollene Körper in eine Pressvorrichtung gelegt und mit dem anderen Körper zusammengepresst. Während des Pressens oder nach dem Pressen werden die verschweißten Körper bei einer Temperatur von 30°C bis 3°C unterhalb der Glasübergangstemperatur des Kunststoffs während einer bestimmten Zeitspanne getempert.

Dieses Verfahren weist verschiedene Nachteile auf. Zum Einen ist das Verfahren verhältnismäßig kompliziert, da das Gas zunächst dem Flüssigkeitsbehälter entnommen, dann durch einen Vorkühler in die Bedampfungskammer geleitet und anschließend durch einen Hauptkühler geführt und in einer Kondensatfalle gesammelt wird. Auf Grund des Temperns werden die verschweißten Körper Temperaturen ausgesetzt, bei denen ggf. in den Mikrostrukturen aufgebrachte Analysemoleküle beschädigt werden (beispielsweise Denaturierung von Proteinen).

Es ist daher die Aufgabe der Erfindung, ein Verfahren zum flächigen Verbinden eines Kunststoffkörpers mit einem weiteren Körper bereitzustellen, das die zuvor genannten Nachteile überwindet, das also insbesondere einfacher ist und bei dem eine Beschädigung von aufgebrachten Molekülen verhindert wird.

Diese Aufgabe wird gelöst durch das Verfahren gemäß Anspruch 1.

Der weitere Körper kann ebenfalls aus einem Kunststoff, insbesondere aus dem selben Kunststoff wie der Kunststoffkörper, sein.

Die Anmelderin stellte fest, dass überraschenderweise eine dauerhafte Verbindung des Kunststoffkörpers mit dem weiteren Körper erzielt wird, wenn der Kunststoffkörper dem Flüssigkeitsdampf oberhalb der Flüssigkeitsoberfläche ausgesetzt wird und danach der Kunststoffkörper und der weitere Körper bei Raumtemperatur aneinandergepresst werden. Auf diese Weise wird also ein sehr einfaches Verfahren zum flächigen Verbinden der beiden Körper erhalten. Weder während des Aneinanderpressens noch nach dem Aneinanderpressen ist ein Tempern, d.h. ein kontrolliertes Erwärmen der verbundenen Körper auf eine Temperatur oberhalb der Raumtemperatur für eine bestimmte Zeitspanne, erforderlich. Außerdem werden kein Vorkühler, kein Hauptkühler, keine Kondensatfalle und kein Ofen benötigt.

Insbesondere braucht das Quellmittel, im Gegensatz zum Stand der Technik, nicht auf eine erhöhte Temperatur erwärmt werden sondern kann mit Raumtemperatur bereitgestellt werden. Das gesamte Verfahren erfolgt bei Raumtemperatur (in dem Bereich von etwa 20°C bis 27°C, insbesondere 21°C bis 25°C). Mögliche Quellmittel zur Verwendung bei dem Verfahren sind beispielsweise Chloroform, Heptan, Ethanol, Benzol, Toluol oder Styrol.

Vorzugsweise kann der vorbestimmte Abstand in dem Bereich von etwa 0,1 bis 10 cm, vorzugsweise etwa 0,5 bis 5 cm, am meisten bevorzugt etwa 1 bis 2 cm, und/oder die vorbestimmte Zeitdauer in dem Bereich von 0,2 bis 300 s, vorzugsweise etwa 0,5 bis 200 s, am meisten bevorzugt 1 bis 10 s, liegen.

Vorteilhafterweise kann der Kunststoffkörper ein Substrat für eine Vorrichtung für Mikroskopuntersuchungen oder für Mikrofluiduntersuchungen oder eine Kunststofffolie zur Verbindung mit einem Substrat für eine Vorrichtung für Mikroskopuntersuchungen oder für Mikrofluiduntersuchungen umfassen. Insbesondere kann der Körper ein Spritzgussteil sein. Der weitere Körper kann ebenfalls aus Kunststoff sein, insbesondere aus dem selben Kunststoff wie der Kunststoffkörper.

Gemäß einer vorteilhaften Weiterbildung kann Schritt b) ein Abdecken eines Bereichs der ausgesetzten Oberfläche mit einer Maske, insbesondere aus einem lösungsmittelresistenten Material, umfassen. Insbesondere kann die Maske Teflon umfassen.

Der Einsatz von Masken bietet verschiedene Vorteile. Wenn beispielsweise ein plasmabehandelter Kunststoff dem Dampf ausgesetzt werden soll, kann der Dampf auf Grund der durch die Plasmabehandlung veränderten Oberflächeneigenschaften nicht mehr in den Kunststoff eindringen, sondern es kondensiert, was eine Eintrübung mehr in den Kunststoff eindringen, sondern es kondensiert, was eine Eintrübung des Kunststoffs zur Folge hat. Je nach Form des Kunststoffkörpers, beispielsweise bei mikrostrukturierten Körpern, kann es auf Grund der inneren Spannungen ebenfalls zu Eintrübungen oder zu Verformungen kommen, wenn der Kunststoffkörper dem Dampf ausgesetzt wird. Wenn außerdem Bereiche der Oberfläche mit Molekülen, insbesondere Makromolekülen, beschichtet oder bespottet sind, können diese durch den Dampf zerstört werden. Die Maske oder ggf. die Masken decken Oberflächenbereiche des Kunststoffkörpers ab, die nicht dem Dampf ausgesetzt werden sollen. Diese Oberflächenbereiche sollten so abgedeckt werden, dass kein Gas in die Oberflächenschichten des Kunststoffs diffundieren kann. Vorzugsweise kann ein Material verwendet werden, das die Oberflächeneigenschaften des Kunststoffs nicht zerstört oder die Oberfläche zerkratzt.

Vorteilhafterweise kann das Verfahren durchgeführt werden, ohne dass die Körper (d.h. der Kunststoffkörper und der weitere Körper) während und/oder nach dem Aneinanderpressen bei einer Temperatur oberhalb Raumtemperatur getempert werden.

Vorzugsweise kann Schritt b) ein lokales Erwärmen des Kunststoffkörpers umfassen. Auf diese Weise kann die Kondensation an bestimmten Oberflächenbereichen des Kunststoffkörpers vermieden werden, beispielsweise an Bereichen, die nicht quellend sind.

Gemäß einer vorteilhaften Weiterbildung kann die Flüssigkeit in einem verschließbaren Behälter bereitgestellt werden und Schritt b) ein Anordnen des Kunststoffkörpers oberhalb eines den Behälter verschließenden Verschlusses, der für die vorbestimmte Zeitdauer geöffnet wird, umfassen.

Auf diese Weise kann der Kunststoffkörper oberhalb der Flüssigkeitsoberfläche angeordnet werden, ohne dass seine Oberfläche bereits dem Flüssigkeitsdampf ausgesetzt wird, da der Verschluss (Blende, Shutter) noch geschlossen ist. Durch das Öffnen des Verschlusses wird dann die Oberfläche des Kunststoffkörpers dem Gas für eine vorbestimmte Zeitdauer in kontrollierter Weise ausgesetzt. Falls bestimmte Bereiche der Oberfläche mit einer Maske abgedeckt werden, sollte dies vor dem Öffnen des Verschlusses geschehen.

Vorzugsweise kann Schritt c) ein Aneinanderpressen des Kunststoffkörpers und des weiteren Körpers mittels jeweils eines Presselements umfassen, wobei wenigstens eines der Presselemente eine zu dem entsprechenden Kunststoffkörper oder zu dem entsprechenden weiteren Körper wenigstens teilweise komplementäre Form aufweist.

Dies ist insbesondere von Vorteil, wenn der Kunststoffkörper und/oder der weitere Körper eine nicht-plane Oberfläche aufweist. Damit ist das Presselement (Pressstempel) der äußeren Form des Kunststoffkörpers oder des weiteren Körpers genau angepasst, was eine homogene Druckverteilung ermöglicht. Vorzugsweise kann das Presselement eine der gesamten dem Presselement zugewandten Oberfläche des Kunststoffkörpers oder des weiteren Körpers komplementäre Form aufweisen. Beispielsweise kann bei Spritzgussteilen das Presselement die Urform bzw. den Master des Körpers umfassen.

Vorteilhafterweise kann Schritt c) ein Aneinanderpressen des Kunststoffkörpers und des weiteren Körpers mittels jeweils eines Presselements umfassen, wobei wenigstens eines der Presselemente eine derartige Aussparung aufweist, dass das Presselement nur teilweise an dem entsprechenden Kunststoffkörper oder dem entsprechenden weiteren Körper flächig anliegt.

Dies ist insbesondere von Vorteil, wenn der Kunststoffkörper und der weitere Körper in einem bestimmten Oberflächenbereich nicht flächig aneinander liegen, beispielsweise weil in einem der beiden Körper eine Aussparung (z.B. ein Graben für einen Kanal oder eine entsprechende Aussparung für ein Reservoir) vorgesehen ist. In diesem Bereich wird dann vorzugsweise der entsprechende Körper nicht mit Druck beaufschlagt, um Verformungen oder Sprünge und Risse zu vermeiden. Dies kann erreicht werden, indem das dem Körper mit der Aussparung entsprechende Presselement und/oder das Presselement des anderen Körpers in dem entsprechenden Bereich eine Aussparung aufweist. Dies ist insbesondere sinnvoll, wenn das gesamte Presselement oder die auf die Oberflächen der Kunststoffkörper wirkende Fläche des Presselements aus einem weichen Material sind. Durch das weiche verformbare Material des Presselementes kann der zu verpressende Kunststoffkörper im Bereich der Aussparung eingedrückt und beschädigt werden, da aufgrund des fehlenden Gegendrucks Scherspannungen auftreten.

Vorteilhafterweise kann die dem entsprechenden Kunststoffkörper oder dem entsprechenden weiteren Körpers zugewandte Oberfläche wenigstens eines Presselements ein Material mit einer Shorehärte A zwischen etwa 60 und 90 umfassen. Auf diese Weise kann sich das Presselement während des Pressvorgangs gleichmäßig an die aneinandergepressten Körper anpassen, was eine optimale Druckverteilung und damit eine homogene Verklebung gewährleistet. Weiterhin werden Verformungen der zu verbindenden Körper, die bei dem Aneinanderpressen mit einer exakt anliegenden Form entstehen können, verhindert.

Gemäß einer vorteilhaften Weiterbildung kann durch das Verbinden des Kunststoffkörper und des weiteren Körpers ein Hohlraum gebildet werden und Schritt c) während und/oder nach dem Aneinanderpressen ein Spülen des Hohlraumes mit einem Gas, vorzugsweise durch Beaufschlagen mit einem Unterdruck, umfassen. Damit wird verhindert, dass Gas, das während des Bedampfens in den Kunststoffkörper diffundiert ist, nach dem Verbinden in den Hohlraum austritt und andere Oberflächen diesem Gas ausgesetzt werden. Durch das Spülen mit Gas, insbesondere mit Luft, wird das aus dem Kunststoff diffundierende Gas in effizienter Weise entfernt.

Vorteilhafterweise kann der Kunststoffkörper eine Kunststofffolie sein und Schritt c) ein Ausstanzen einer vorbestimmten Fläche der Kunststofffolie vorangehen. Damit lässt sich einerseits die Folie während des Verfahrens vor dem Stanzen einfacher transportieren. Andererseits ist die bedampfte Folie häufig weicher und lässt sich besser stanzen.

Vorzugsweise kann das Ausstanzen mittels eines Presselements und Schritt c) mit dem selben Presselement durchgeführt werden. Durch die Verwendung eines solchen Stanz-Presselements kann das Verfahren weiter vereinfacht werden.

Gemäß einer vorteilhaften Weiterbildung kann Schritt c) ein Anordnen des Kunststoffkörpers an einem Presselement mittels Unterdruck umfassen. Damit wird insbesondere bei Verwendung einer Kunststofffolie die Anordnung dieser Folie an dem Presselement erleichtert.

Mit den zuvor beschriebenen Verfahren kann eine Vorrichtung für Mikroskopuntersuchungen mit einem Substrat aus Kunststoff, auf dem wenigstens ein Flüssigkeitsreservoir mit einer auf dem Substrat angeordneten Seitenwandung vorgesehen ist, wobei in dem wenigstens einen Flüssigkeitsreservoir wenigstens zwei Teilreservoire vorgesehen sind, die jeweils durch eine Trennwand mit geringerer Höhe als die der Seitenwandung getrennt sind, hergestellt werden.

Mit dieser Vorrichtung kann insbesondere für Mikroskopuntersuchungen eine Flüssigkeit mit den zu untersuchenden Teilchen (beispielsweise Zellen, Moleküle) in das Reservoir gegeben werden. Durch Entfernen eines Teils dieser Flüssigkeit verbleibt dann nur noch Flüssigkeit in den Teilreservoiren, die dann getrennt untersucht werden können. Auf Grund der geringeren Höhe der Teilreservoire sind diese insbesondere zum Köhlern (optimiertes Ausleuchten der Probe durch geeignete Einstellung des Mikroskopkondensors) geeignet. Vorzugsweise kann das Substrat ein optisch hochwertiges Material (d.h. ohne Doppelbrechung und Autofluoreszenz) umfassen oder aus diesem bestehen. Die Trennwände zwischen verschiedenen Teilreservoiren können unterschiedliche Höhe aufweisen.

Vorzugsweise kann jedes Teilreservoir durch eine Ausnehmung in dem Substrat definiert sein. Dies bedeutet, dass die Trennwand zwischen jeweils zwei Teilreservoiren kleiner als die Substratdicke ist.

Vorteilhafterweise kann das Substrat eine Deckplatte und eine Bodenplatte, insbesondere in Form einer Folie, umfassen und jedes Teilreservoir durch einen Durchbruch in der Deckplatte und durch die Bodenplatte definiert sein.

Gemäß einer vorteilhaften Weiterbildung kann jede Trennwand eine hydrophobe Oberfläche aufweisen. Damit wird ermöglicht, dass nach Entfernen eines Teils der Flüssigkeit aus dem Reservoir die Flüssigkeiten der Teilreservoire nicht mehr in Kontakt miteinander stehen.

Die zuvor beschriebenen Vorrichtungen können weiterhin einen Deckel zum Verschließen des wenigstens einen Flüssigkeitsreservoirs umfassen. Der Deckel kann das Flüssigkeitsreservoir gasdicht oder gasdurchlässig verschließen. Mit einem solchen Deckel lässt sich das Kontaminierungsrisiko der in dem Reservoir enthaltenen Flüssigkeit reduzieren. Bei einem gasdichten Verschließen können insbesondere Untersuchungen unter einer vorbestimmten Gasatmosphäre durchgeführt werden.

Vorzugsweise können der Deckel und die Seitenwandung derart ausgebildet sein, dass die seitliche Außenfläche des Deckels mit der seitlichen Außenfläche der Seitenwandung fluchtet. Damit lässt sich diese Vorrichtung besser greifen, was insbesondere den händischen Transport vereinfacht und sicherer macht.

Vorzugsweise kann der Deckel an der seitlichen Außenfläche der Seitenwandung flächig anliegen. Damit kann eine sichere und dichte Verbindung zwischen Deckel und Umwandung gewährleistet werden.

Gemäß einer vorteilhaften Weiterbildung kann der Deckel oder die Seitenwandung ein Einrastelement und die Seitenwandung oder der Deckel eine Aussparung zur Aufnahme des Einrastelements aufweisen. Auf diese Weise kann der Deckel fest mit der Seitenwandung verbunden werden.

Weitere Vorteile und Merkmale werden nachfolgend an Hand der Figuren beispielhaft erläutert.
- Figur 1: zeigt ein Beispiel einer Flusskammer mit einem Substrat, das mit einer Kunststofffolie verbunden wird,
- Figur 2: ist eine Querschnittsansicht der Flusskammer, nachdem die Folie mit dem Substrat verbunden wurde,
- Figur 3: zeigt ein Beispiel einer Vorrichtung für Mikrofluiduntersuchungen mit einem Deckel,
- Figur 4: zeigt die Vorrichtung von Figur 3 mit geschlossenem Deckel,
- Figur 5: illustriert ein Beispiel eines Substrats mit Durchbrüchen für die Teilreservoire,
- Figur 6: zeigt ein Beispiel einer Vorrichtung für Mikroskopuntersuchungen mit zwei Reservoiren mit Teilreservoiren,
- Figur 7: illustriert ein weiteres Beispiel einer Vorrichtung für Mikroskopuntersuchungen mit runden Teilreservoiren,
- Figur 8: illustriert ein Beispiel einer Vorrichtung für Mikroskopuntersuchungen mit zwei Reservoiren mit runden Teilreservoiren.

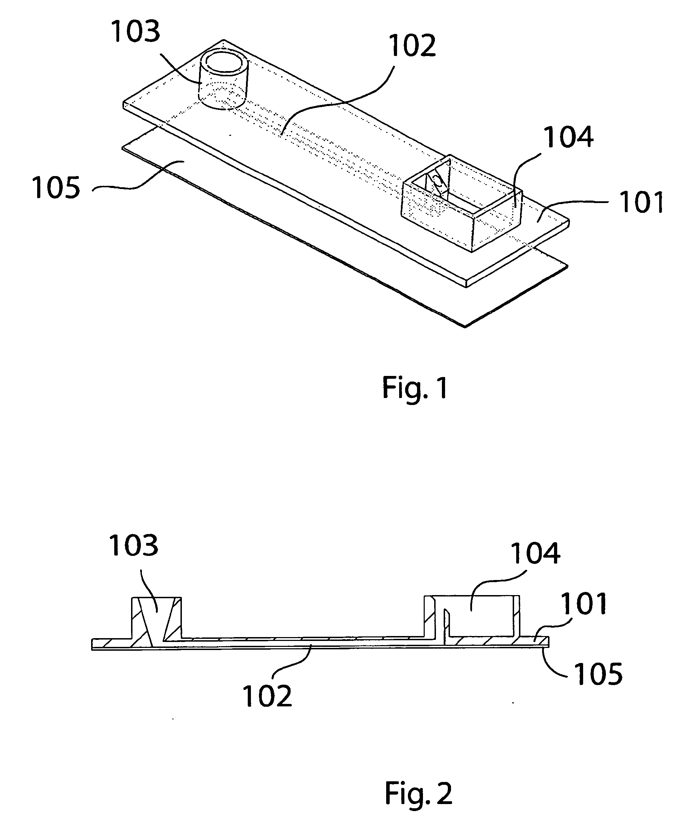

Das erfindungsgemäße Verfahren zum flächigen Verbinden eines Kunststoffkörpers mit einem weiteren Körper wird nachfolgend an Hand des in Figur 1 und 2 gezeigten Beispiels einer Mikrofluidkammer oder Flusskammer illustriert.

Die gezeigte Flusskammer umfasst ein Substrat 101, in dessen Unterseite ein Graben 102 vorgesehen ist. Der Graben 102 ist einerseits mit einer auf dem Substrat 101 angeordneten Aufnahme 103 verbunden. Diese Aufnahme 103 ist so ausgebildet, dass sie eine Pipettenspitze aufnehmen kann, um auf diese Weise Flüssigkeit an den Kanal abzugeben. Vorzugsweise ist die Innenseite der Wand der Aufnahme konisch ausgebildet, damit eine Pipettenspitze dicht anliegt und das Totvolumen verringert werden kann. Dies ist insbesondere auch in Figur 2 zu sehen, die einen Querschnitt der Flusskammer zeigt.

Andererseits ist der Kanal 102 mit einem Reservoir 104 verbunden, dessen Seitenwandung ebenfalls auf dem Substrat 101 angeordnet ist. Der Kanal mündet in dieses Reservoir 104 oberhalb der Grundfläche des Reservoirs, um ein Rückfließen von Flüssigkeit aus dem Reservoir in den Kanal zu verhindern. Vorzugsweise sind das Substrat 101, die Aufnahme 103 und das Flüssigkeitsreservoir 104 einstückig ausgebildet, beispielsweise als ein Spritzgussteil.

Zum Abdecken des Kanals ist weiterhin eine Kunststofffolie 105 vorgesehen. Auf Grund ihrer geringen Dicke ist eine Folie besonders gut für optische Untersuchungen mittels inverser Mikroskopie des Kanals geeignet. Das Substrat 101 und die Folie 105 können aus Polykarbonat, Polystyrol, PMMA, COC, COP, PE, PVC, PP etc. sein. Insbesondere können das Substrat und die Kunststofffolie aus dem selben Kunststoff sein.

Je nach gewünschter Untersuchungsmethode können Bereiche des Kanals oder der Folie funktionalisiert oder mit Molekülen, insbesondere Makromolekülen, gespottet sein.

Um das Zellwachstum in den Reservoiren zu steuern oder Makromoleküle an Oberflächen zu koppeln, können auch Polyelektrolytfilme verwendet werden. Diese werden mit abwechselnder Ladung als Multilayer aufgebracht werden. Generell können Schichten aus folgenden Polymeren verwendet werden; PSS, PAH, PAA, PEI, PEO, PMA, PGA, PDL, PLL und deren Derivate. Für Zellwachstum besonders geeignet ist PSS als oberste Schicht (d.h. die Schicht mit Zellkontakt). Insbesondere ist die Schichtfolge PAA-PAH-PSS-PAH-PSS geeignet. Durch Aufreinigung der Polyelektrolyten z.B. durch Dialyse oder Umkristallisation können vereinzelt deutliche Verbesserungen erzielt werden. Das Verfahren ist besonders gut in Kanalstrukturen anzuwenden, da Spülvorgänge einfach durchzuführen sind.

Das erfindungsgemäße Verfahren kann, wie nachfolgend beispielhaft beschrieben, verwendet werden, um die Kunststofffolie mit dem Substrat zu verbinden. Dazu wird ein Quellmittel für den Kunststoff in flüssiger Form in einem Behälter bereitgestellt, der abgedeckt ist, wobei in der Abdeckung ein Verschluss (Shutter) vorgesehen ist. Der Verschluss kann beheizbar sein. Die Folie wird in dem Bereich oberhalb des Quellmittelreservoirs transportiert, so dass die Folie ca. 1 bis 2 cm oberhalb der Flüssigkeitsoberfläche angeordnet ist.

Je nach geplanter Verwendung der Flusskammer können manche Bereiche der Folienoberfläche physikalisch, chemisch oder biologisch behandelt sein. Beispielsweise kann die Oberfläche COOH- oder NH₂-funktionalisiert sein. In diesem Fall kann das Quellmittelgas auf Grund der veränderten Oberflächeneigenschaften nicht mehr in die Folie eindringen. Um eine entsprechende Eintrübung des Kunststoffs zu vermeiden, werden diese Bereiche mit einer Maske abgedeckt. Dazu kann zwischen dem Quellmittelreservoir und der zu bedampfenden Folie eine Vorrichtung angebracht sein, die den entsprechenden Bereich während des Bedampfens mit einer Maske (beispielsweise aus Teflon) abdeckt.

Die Maske kann hierbei insbesondere in ihrem Innenbereich eine Vertiefung aufweisen. Somit kommt nur der Rand des abzudeckenden Bereiches der Folienoberfläche mit der Maske in Berührung. Die funktionalisierten Bereiche des abzudeckenden Kunststoffes kommen durch die eingebrachte Vertiefung nicht in direkten Kontakt mit der Maske und können somit nicht beschädigt werden. Auch können durch Öffnungen in der Maske unterschiedliche Luftströme angelegt werden. Diese Luftströmungen können so konzipiert sein, dass keine Fremdatome mit dem funktionalisierten Bereich, insbesondere während des Bedampfens, in Kontakt kommen können.

Erst nachdem die Maske positioniert ist und die entsprechenden Bereiche der Folie abgedeckt sind, wird der Verschluss geöffnet und die Folie dem Quellmitteldampf ausgesetzt. Nach der gewünschten Bedampfungszeit wird der Verschluss geschlossen und das Volumen zwischen der bedampften Folie und dem Verschluss mit Gas (beispielsweise Luft) gespült, um Reste des Quellmitteldampfes zu entfernen.

Während des Bedampfungsprozesses sollte die Abdeckmaske auf dem zu bedampfenden Körper fest aufliegen; dadurch bleiben Funktionalisierungen und ggf. vorhandene Strukturierungen erhalten und Makromoleküle werden nicht zerstört. Die Abdeckvorrichtung kann dabei insbesondere in die Blende integriert sein. Um Kondensationseffekte an nicht-quellenden Bereichen eines zu bedampfenden Körpers zu vermeiden, kann dieser auch lokal während des Bedampfens erwärmt werden.

Nach dem Verdampfen werden das Substrat und die Kunststofffolie mit Hilfe von Pressstempeln aneinandergepresst, um die beiden Körper miteinander zu verbinden. Da bei einem Verschweißen mittels Bedampfen das Quellmittel nur einige 10 Mikrometer in den Kunststoff diffundiert, muss beim Verpressen auf der gesamten zu verbindenden Fläche ein homogener Druck anliegen. Bei Körpern, die eine plane Außenoberfläche, d.h. die Oberfläche, die von dem anderen Körper abgewandt ist und die damit durch den Pressstempel mit Druck beaufschlagt wird) aufweisen, kann das Aneinanderpressen jeweils mittels einer dicht auf dem Körper aufliegenden Platte (beispielsweise Metallplatten) erfolgen.

Falls die Körper keine plane Außenoberfläche aufweisen, wie in dem in Figur 1 und 2 gezeigten Beispiel, werden vorzugsweise Pressstempel verwendet, die an die Geometrie der Außenseiten der zu verbindenden Körper angepasst sind oder sich daran anpassen. Solche Pressstempel können beispielsweise aus Aluminium sein. Beispielsweise können die Pressstempel den Master des entsprechenden Spritzgussteils umfassen.

Um ein Anpassen des Presselements an den Körper zu ermöglichen, sollte das Presselement ein weiches Material (Shorehärte A 60 bis 90) umfassen. Dazu können Pressstempel verwendet werden, die nicht passgenau an den jeweiligen Kunststoffkörper angepasst sind, sondern eingewisses Spiel (beispielsweise 500 µm) aufweisen. Auf den Oberflächen dieser Pressstempel wird dann ein weiches Material angeordnet, welches sich beim Pressvorgang homogen an die zu verpressenden Körper anpasst. Damit wird eine optimale Druckverteilung gewährleistet. Auch werden Verformungen der zu verbindenden Körper, die bei einem Aneinanderpressen mit einer exakt anliegenden Form entstehen können, durch das Verwenden einer Form mit Spiel verhindert, so dass der Träger beispielsweise plan bleibt.

Wenn der Kunststoffkörper oder der weitere Körper derart ausgebildet ist, dass er eine Aussparung aufweist, die nach dem Verbinden einen Hohlraum bilden, kann es zu einer Beschädigung kommen, wenn der entsprechende Bereich des Kunststoffkörpers mit Druck beaufschlagt wird. Dies liegt daran, dass auf Grund der Aussparung kein Gegendruck durch den anderen Körper besteht (nicht unterstützte Bereiche). In diesen nicht unterstützten Bereichen kann es demnach zu Rissen oder Sprüngen kommen. Dies kann verhindert werden, wenn in den entsprechenden Bereichen der Presselemente eine Aussparung vorgesehen ist, so dass in diesem Bereich kein Druck ausgeübt wird.

Bei dem in Figur 1 und 2 gezeigte Beispiel weist das Substrat 101 eine Aussparung in Form eines Grabens 102 auf. In diesem Fall weist das Presselement des Spritzgussteils vorzugsweise eine gummiunterstützte Aufnahme auf, die im Bereich des Grabens des Spritzgussteils eine Aussparung hat. Diese Aussparung liegt somit in dem Bereich des Pressstempels, der ansonsten beim Aneinanderpressen oberhalb des Grabens an dem Substrat flächig anliegen würde.

Das Presselement der Folie ist aus vorzugsweise hochpoliertem Stahl. Würde die gummiunterstützte Aufnahme des Spritzgussteils keine Aussparung im Kanalbereich haben, würden im Bereich des Kanals Risse im Spritzgussteil auftreten. Falls das auf die Folie wirkende Presselement als gummiunterstützende Aufnahme ohne Aussparung im zu bildenden Kanalbereich ausgebildet ist, würde dies ebenfalls zu Rissen in der Folie führen. Ursachen dafür ist der fehlende Gegendruck im Kanal und die dadurch im Kanalbereich wirkenden Spannungen durch die verformbare Gummiunterstützung die beim Zusammenpressen in den Kanalbereich gedrückt wird.

Werden zwei polierte (harte) Stahlplatten verwendet, muss nicht notwendigerweise eine Aussparung im zu bildenden Kanalbereich in den Stempel eingebracht sein, da sich der Stahl bei den entsprechenden Drücken nicht in den Kanalbereich drücken kann.

Allerdings ist es auch möglich, dass sowohl das Presselement des Spritzgussteils als auch das Presselement der damit zu verbindenden Folie, durch die der Graben verschlossen und damit ein Kanal gebildet wird, eine Aussparung aufweisen. Diese Aussparung liegt in dem Bereich der Pressstempel, der ansonsten beim Aneinanderpressen oberhalb bzw. unterhalb des Grabens an dem Substrat bzw. der Folie flächig anliegen würde.

Bei dem erfindungsgemäßen Verfahren kann einer der zu verbindenden Körper oder können beide Körper bedampft werden. In dem gezeigten Beispiel, bei dem das Substrat ein Spritzgussteil ist, das mit einer Folie verbunden werden soll, wird vorzugsweise nur die Kunststofffolie bedampft.

Bei dem Aneinanderpressen des Substrats und der Folie kann es zu Eintrübungen des Substratkunststoffs im Bereich des Kanals kommen. Dies ist unabhängig von der Herstellungsweise des Substrats und der Mikrostrukturierung (bspw. Spritzguss oder Fräsen eines Kunststoffblocks). Die Eintrübungen entstehen dadurch, dass bei oder nach den Aneinanderpressen Quellmittelgas aus der bedampften Folie diffundiert und mit der gegenüberliegenden Seite des Substrats in Kontakt kommt. Dabei können Kondensationseffekte auftreten, wodurch auch Funktionalisierungen an der Oberfläche zerstört werden können. Dies kann verhindert werden, wenn während des Aneinanderpressens der Kanal mit Gas, vorzugsweise mit trockener Luft, gespült wird. Vorzugsweise wird dazu ein Unterdruck an einem Kanalausgang angelegt. Auch nach dem Aneinanderpressen der beiden Körper kann noch für eine vorbestimmte Zeitdauer, beispielsweise 1 bis 10 min., ein Unterdruck angelegt werden.

Das Substrat bzw. der Spritzgussrohling, der in einer gummiunterstützten Aufnahme angeordnet ist, und die bedampfte Folie werden vorzugsweise über ein automatisches Transportsystem positionsgenau übereinander angeordnet und mit einem Druck zwischen 1 und 6 bar bei Raumtemperatur während eines Zeitraums zwischen 0,5 und 200 s aneinandergepresst. Anschließend wird die resultierende Flusskammer ausgeworfen.

Vorzugsweise wird für das Verfahren eine fortlaufende Folie verwendet, aus der jeweils Teilstücke ausgestanzt werden, die dann mit dem Substrat verbunden werden. Um einen positionsgenauen Transport der Folie zu gewährleisten, kann diese perforiert sein. Diese Perforierungen können als Transporthilfe verwendet werden, und gleichzeitig zur Bestimmung der Position der Folie im Verhältnis zum Spritzgussrohling dienen. Der Transport kann z.B. über Zahnräder oder vertikal zur Folie bewegbare Senkkegel erfolgen.. Die Perforierungen können z.B. als kreisrunde Öffnung ausgebildet sein, und die Folienpositionierung kann mittels eines Senkkegel durchgeführt werden. Ein positionsgenauer Folientransport kann somit die folgenden Schritte umfassen
1) Auf die Folie wirkt eine Kraft in ihrer Transportrichtung. Die Folie bewegt sich jedoch nicht, da sie durch den in die Perforation eingetauchten Senkkegel fixiert wird.
2) Der Senkkegel fährt kurz aus der Perforation heraus; durch die wirkende Kraft wird die Folie weitertransportiert. Sobald sich die Perforation nicht mehr unterhalb des Senkkegels befindet, drückt der Senkkegel wieder auf die Folie auf.
3) Der Senkkegel taucht in die nächste auf der Folie angebrachten Perforierung ein und blockiert dadurch den Weitertransport. Nach einer definierten Zeit fährt der Senkkegel aus der Perforierung heraus und Schritt 1.) wird wiederholt.

Durch die Dauer der Blockade des Folientransportes kann die Bedampfungs- sowie die Pressdauer eingestellt werden. Durch den Abstand der Perforierungen wird die Transportstrecke und die Positionierung der Folie auf dem Spritsgussträger bestimmt.

Ein positionsgenaues Verbinden von Folie und Substrat ist insbesondere dann wichtig, wenn die Folie an bestimmten Stellen funktionalisiert oder mit Molekülen bespottet ist und sich diese Stellen nach dem Verbinden auf der Innenseite des resultierenden Kanals befinden sollen. Die Perforierung kann bei Verwendung einer streifenförmigen Folie am Rand dieser Folie ausgebildet sein oder zwischen zwei auszustanzenden Teilstücken der Folie vorgesehen sein. Insbesondere in ersterem Fall ist die Folie vorteilhafterweise etwas breiter als die Grundfläche des Substrats, mit dem sie verbunden werden soll. Die Folie wird dann nach dem Bedampfen ausgestanzt. Dabei kann das ausgestanzte Folienstück auch etwas kleiner (beispielsweise um etwa 100 µm) als die Grundfläche des Substrats sein. Um ein Verrutschen der ausgestanzten Folie auf dem Pressstempel zu verhindern, wird zwischen dem Presstempel und der Folie ein Unterdruck angelegt. Vorzugsweise wird ein geringer Abstand zwischen der Stanzvorrichtung und der Pressvorrichtung gewählt (beispielsweise zwischen 0,5 und 5 cm).

Bei einer Grundflächenabmessung des Substrats von etwa 25 mm x 75 mm kann die Folie beispielsweise 28 mm breit sein. Die Ausstanzgröße kann dann bei ca. 24,8 mm x 74,8 mm liegen.

Statt getrennter Stanz- und Pressvorrichtungen kann der Ausstanzstempel gleichzeitig als Pressstempel verwendet werden. Vorzugsweise wird die bedampfte Folie gestanzt, da diese weicher ist und sich besser an den Stanz-Pressstempel anschmiegt.

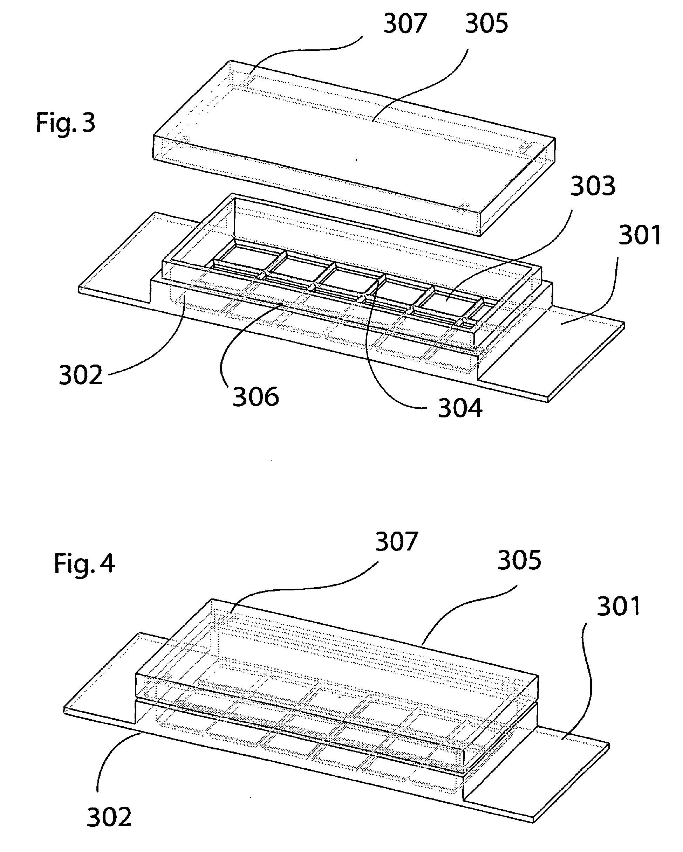

In Figur 3 ist eine Vorrichtung für Mikroskopuntersuchungen illustriert. Diese Vorrichtung umfasst ein Substrat 301 aus Kunststoff mit einem Flüssigkeitsreservoir. Das Flüssigkeitsreservoir umfasst eine auf dem Substrat 301 angeordnete Seitenwandung 302. In dem Flüssigkeitsreservoir ist eine Mehrzahl von Teilreservoiren vorgesehen, die durch Trennwände 304 mit geringerer Höhe als die der Seitenwandung 302 getrennt sind.

In einem weiteren Ausführungsbeispiel können die Trennwände zwischen zwei Reservoiren so dünn ausgeführt sein, dass die beiden Reservoire in einem mikroskopischen Bildausschnitt beobachtbar sind. Je nach Vergrößerung liegt der mikroskopische Bildausschnitt zwischen 5000 µm (10 X Objektiv) und 50 µm (100 X Objektiv). Somit sollte die Dicke der Trennwand zwischen 100 µm und 5 µm liegen. Dadurch können z.B. verschiedene Zelllinien gleichzeitig und parallel in einem Experiment beobachtet werden.

Dies ist insbesondere bei zeitkritischen Zellexperimenten mit Primärzellen nützlich. Auch können identische Zellen in verschiedenen Medien parallel analysiert werden.

In einem besonderen Ausführungsbeispiel sind die Stege, welche die Reservoirs bilden, senkrecht zur Grundfläche ausgebildet. Dadurch soll verhindert werden, dass bei Durchlichtbeleuchtung der Probe von den Stegen Schatten auf die zu beobachteten Bereiche fallen. Dies ist dann der Fall, wenn die Stege schräg in Richtung der Reservoire ausgebildet sind.

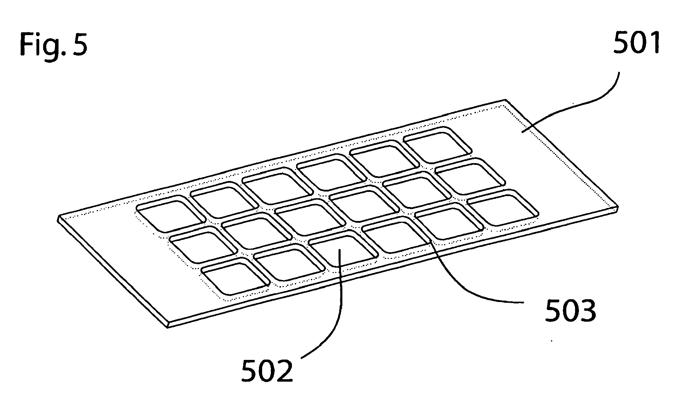

In dem Beispiel umfasst das Substrat 301 eine Deckplatte und eine Bodenplatte, die in Form einer Folie ausgebildet ist und in den Figuren nicht gezeigt ist. In Figur 5 ist eine solche Deckplatte 501 gezeigt. Durchbrüche 502 definieren - gemeinsam mit der Bodenfolie - die Teilreservoire, die durch Trennwände oder Stege 503 voneinander getrennt sind. In diesem Beispiel weisen alle Trennwände dieselbe Höhe auf, die der Dicke der Deckplatte 501 entspricht. Alternativ können die Trennwände jedoch auch unterschiedliche Höhen aufweisen. Weiterhin können auch unterschiedliche Querschnittsformen für die Teilreservoire gewählt werden (beispielsweise rechteckig, kreisförmig, oval etc.). Die Trennwände sind hier vorzugsweise zwischen 100 µm bis 30 mm dick.

Die Bodenfolie kann zwischen 1 µm und 1 mm dick sein und insbesondere ein optisch hochwertiges Material (d.h. ohne Doppelbrechung und Autofluoreszenz) aufweisen. Bereits mit der in Figur 5 gezeigten Deckplatte (ohne zusätzliche auf dem Substrat aufgebrachte Seitenwandung für ein Reservoir), verbunden mit einer Bodenfolie, können Mikroskopieuntersuchungen von Zellen, Bakterien und Molekülen durchgeführt werden. Auf Grund der geringen Dicke der Deckplatte sind diese Vorrichtungen sehr gut zum Köhlern geeignet und können auch problemlos in einen Fluoreszenz-Reader eingebracht werden. Die Abmessungen des Substrats sind vorzugsweise eine Länge von 75 bis 76 mm und eine Breite von 25 bis 26 mm.

Alternativ zu dem Ausführungsbeispiel mit einer Deckplatte und einer Bodenfolie kann das Substrat 301 auch durch Fräsen von Aussparungen in eine Kunststoffplatte erhalten werden.

Bei der Ausführung als Spritzgussteil mit Durchbrüchen kann die Bodenfolie mittels des zuvor beschriebenen Verfahrens mit der Deckplatte verbunden werden.

Die Teilreservoire 303 in Figur 3 sind durch die Seitenwandung 302 in ein Reservoir zusammengefasst. Dadurch können in einem ersten Untersuchungsschritt alle Teilreservoire mit derselben Lösung befüllt werden (beispielsweise um Zellen auszusäen). Ein Teil dieser Lösung kann dann entfernt werden, so dass nur noch in den Teilreservoiren Flüssigkeit verbleibt. Dabei sollten die Flüssigkeiten der verschiedenen Teilreservoire nicht mehr in Kontakt sein, was beispielsweise durch Trennwände mit hydrophoben Oberflächen erreicht werden kann. In einem weiteren Schritt können dann die Teilreservoire mit unterschiedlichen Lösungen (für chemische oder biologische Reaktionen) befüllt werden.

Das Reservoir kann mit einem Deckel 305 verschlossen werden. Die Seitenwandung ist auf Grund des Absatzes 306 derart ausgebildet, dass der Deckel 305 flächig an der Seitenwandung anliegt und mit der seitlichen Außenfläche der Seitenwandung fluchtet, wie insbesondere auch in Figur 4 zu sehen ist. Der Deckel kann so ausgebildet sein, dass er das Flüssigkeitsreservoir gasdicht verschließt. Alternativ können, wie in dem Beispiel von Fig. 3, Beabstandungselemente 307 vorgesehen sein, so dass nach Verschließen des Reservoirs ein Luftspalt verbleibt.

Der Deckel und die Seitenwandung können so ausgebildet sein, dass ein festes Verschließen des Flüssigkeitsreservoirs ermöglicht wird. Dazu kann der Deckel oder die Seitenwandung ein oder mehrere Einrastelemente aufweisen, die von entsprechenden Aussparungen in dem jeweils anderen Körper aufgenommen werden.

Auf Grund des Fluchtens der seitlichen Außenfläche des Deckels und der seitlichen Außenfläche der Seitenwandung wird vermieden, dass beim händischen Transport der Vorrichtung der Deckel nicht versehentlich entfernt wird.

Der Deckel kann so fest mit der Kammer verbunden sein, dass die Kammer auch in gefüllten Zustand transportiert werden kann, wenn nur der Deckel festgehalten wird. ( Dazu muss die Reibungskraft zwischen Kammer und Deckel größer als die entsprechende Gravitationskraft der Kammer mit ihrem Inhalt sein.)

In den gezeigten Beispielen beträgt das Volumen des Flüssigkeitsreservoirs etwa 1 bis 10 ml, die Volumina der Teilreservoire etwa 10 µl bis 1 ml.

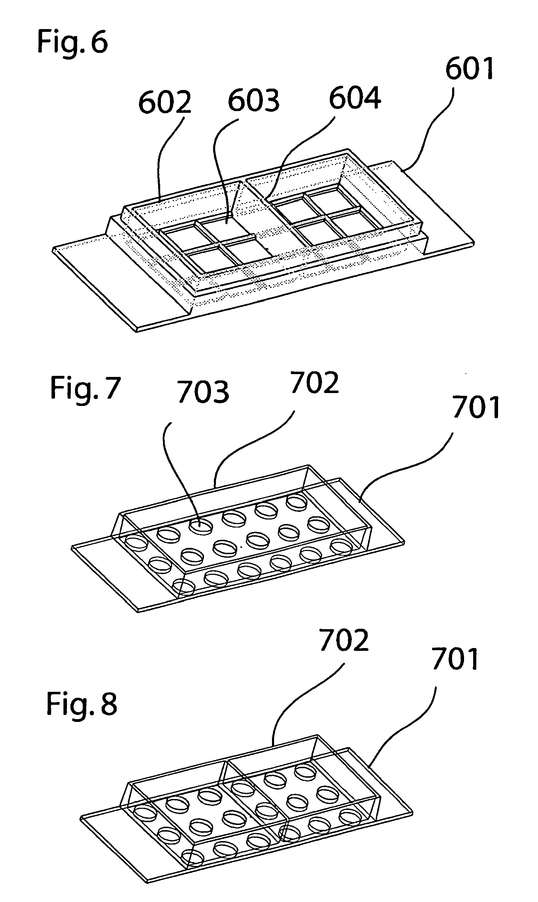

In Figur 6 ist eine Vorrichtung für Mikroskopuntersuchungen gezeigt, die auf einem Substrat 601 zwei Flüssigkeitsreservoire 602 umfasst. Jedes dieser Flüssigkeitsreservoire umfasst eine Mehrzahl von Teilreservoiren 603. Die Flüssigkeitsreservoire werden durch eine Trennwand 604 getrennt und sind so angeordnet, dass sie durch einen gemeinsamen Deckel verschlossen werden können.

In den Figuren 7 und 8 sind Vorrichtungen für Mikroskopuntersuchungen gezeigt, die auf einem Substrat 701 ein (Figur 7) oder zwei (Figur 8) Flüssigkeitsreservoire 702 aufweisen. In diesen Flüssigkeitsreservoiren sind Teilreservoire 703 vorgesehen, die einen kreisförmigen Querschnitt aufweisen. Im Gegensatz zu den Flüssigkeitsreservoiren der zuvor beschriebenen Beispiele weist die Seitenwandung in diesen Beispielen keinen Absatz auf, so dass bei einer Verwendung des Deckels aus Figur 3 und 4 dieser nicht mit der Seitenwandung fluchten würde.

## Patentansprüche

1. Verfahren zum flächigen Verbinden eines Kunststoffkörpers mit einem weiteren Körper aus Kunststoff mit den Schritten:
a) Bereitstellen einer Flüssigkeit mit Raumtemperatur, die ein Quellmittel für den Kunststoff ist,
b) Anordnen des Kunststoffkörpers in einem vorbestimmten Abstand oberhalb der Flüssigkeitsoberfläche, wobei eine Oberfläche des Kunststoffs dem Flüssigkeitsdampf für eine vorbestimmte Zeitdauer ausgesetzt wird,
c) Aneinanderpressen der ausgesetzten Oberfläche des Kunststoffkörpers und einer Oberfläche des weiteren Körpers bei Raumtemperatur, um die Körper zu verbinden,
wobei das Verfahren bei Raumtemperatur durchgeführt wird.

2. Verfahren nach Anspruch 1, wobei der vorbestimmte Abstand in dem Bereich von etwa 0,1 bis 10 cm, vorzugsweise etwa 0,5 bis 5 cm, am meisten bevorzugt etwa 1 bis 2 cm, und/oder die vorbestimmte Zeitdauer in dem Bereich von 0,2 bis 300 s, vorzugsweise etwa 0,5 bis 200 s, am meisten bevorzugt 1 bis 10 s, gewählt wird.

3. Verfahren nach Anspruch 1 oder 2, wobei Schritt b) ein Abdecken eines Bereichs der ausgesetzten Oberfläche mit einer Maske, insbesondere aus einem lösungsmittelresistenten Material, umfasst.

4. Verfahren nach einem der vorangegangenen Ansprüche, ohne dass die Körper während und/oder nach dem Aneinanderpressen bei einer Temperatur oberhalb Raumtemperatur getempert werden.

5. Verfahren nach einem der vorangegangenen Ansprüche, wobei die Flüssigkeit in einem verschließbaren Behälter bereitgestellt wird und Schritt b) ein Anordnen des Kunststoffkörpers oberhalb eines den Behälter verschließenden Verschlusses, der für die vorbestimmte Zeitdauer geöffnet wird, umfasst.

6. Verfahren nach einem der vorangegangenen Ansprüche, wobei Schritt c) ein Aneinanderpressen des Kunststoffkörpers und des weiteren Körpers mittels jeweils eines Presselements umfasst, wobei wenigstens eines der Presselemente eine zu dem entsprechenden Kunststoffkörper oder zu dem entsprechenden weiteren Körper wenigstens teilweise komplementäre Form und/oder eine derartige Aussparung, dass das Presselement nur teilweise an dem entsprechenden Kunststoffkörper oder dem entsprechenden weiteren Körper flächig anliegt, aufweist.

7. Verfahren nach Anspruch 6, wobei die dem entsprechenden Kunststoffkörper oder dem entsprechenden weiteren Körper zugewandte Oberfläche wenigstens eines Presselements ein Material mit einer Shorehärte A zwischen etwa 60 und 90 umfasst.

8. Verfahren nach einem der vorangegangenen Ansprüche, wobei durch das Verbinden des Kunststoffkörpers und des weiteren Körpers ein Hohlraum gebildet wird und Schritt c) während und/oder nach dem Aneinanderpressen ein Spülen des Hohlraums mit einem Gas, vorzugsweise durch Beaufschlagen mit einem Unterdruck, umfasst.

9. Verfahren nach einem der vorangegangenen Ansprüche, wobei der Kunststoffkörper eine Kunststofffolie ist und Schritt c) ein Ausstanzen einer vorbestimmten Fläche der Kunststofffolie vorangeht.

## Claims

1. Method for surface-bonding a plastic body to a further body made of plastic, comprising the steps:
a) providing a liquid at room temperature, which is a swelling agent for the plastic,
b) arranging the plastic body at a predefined distance above the surface of the liquid, with one surface of the plastic being exposed to the liquid vapour for a predefined period of time,
c) pressing together the exposed surface of the plastic body and a surface of the further body at room temperature, in order to bond the bodies,
wherein the method is carried out at room temperature.

2. Method according to claim 1, wherein the predefined distance is selected in the range from approximately 0.1 to 10 cm, preferably approximately 0.5 to 5 cm, most preferably approximately 1 to 2 cm, and/or the predefined period of time is selected in the range from 0.2 to 300 s, preferably approximately 0.5 to 200 s, most preferably 1 to 10 s.

3. Method according to claim 1 or 2, wherein step b) comprises covering a region of the exposed surface with a mask, in particular made of a solvent-resistant material.

4. Method according to one of the preceding claims, without the bodies being heat-treated at a temperature above room temperature during and/or after the pressing-together operation.

5. Method according to one of the preceding claims, wherein the liquid is provided in a closable container and step b) comprises arranging the plastic body above a closure element which closes the container and which is opened for the predefined period of time.

6. Method according to one of the preceding claims, wherein step c) comprises pressing together the plastic body and the further body by means of a respective pressing element, wherein at least one of the pressing elements has a shape that is at least partially complementary to the corresponding plastic body or to the corresponding further body and/or has a cutout such that the pressing element bears only partially against the corresponding plastic body or the corresponding further body.

7. Method according to claim 6, wherein the surface of at least one pressing element which faces towards the corresponding plastic body or the corresponding further body comprises a material with a Shore A hardness between approximately 60 and 90.

8. Method according to one of the preceding claims, wherein a cavity is formed by the bonding of the plastic body and the further body and step c) comprises purging the cavity with a gas, preferably by subjecting it to a negative pressure, during and/or after the pressing-together operation.

9. Method according to one of the preceding claims, wherein the plastic body is a plastic film and step c) is preceded by a punching-out of a predefined area of the plastic film.

## Revendications

1. Procédé pour relier en surface un corps en matière plastique à un autre corps en matière plastique, avec les étapes qui consistent :
a) à préparer un liquide à température ambiante qui constitue un agent gonflant pour la matière plastique,
b) à disposer le corps en matière plastique à une distance prédéfinie au-dessus de la surface du liquide, une surface de la matière plastique étant exposée à la vapeur de liquide pendant une durée prédéfinie,
c) à presser l'une contre l'autre ladite surface exposée du corps en matière plastique et une surface de l'autre corps à température ambiante afin de relier les corps,
le procédé étant mis en oeuvre à température ambiante.

2. Procédé selon la revendication 1, selon lequel la distance prédéfinie est choisie dans la plage d'environ 0,1 à 10 cm, de préférence d'environ 0,5 à 5 cm et plus spécialement d'environ 1 à 2 cm, et/ou la durée prédéfinie est choisie dans la plage de 0,2 à 300 s, de préférence d'environ 0,5 à 200 s et plus spécialement de 1 à 10 s.

3. Procédé selon la revendication 1 ou 2, selon lequel l'étape b) comprend un recouvrement d'une zone de la surface exposée avec un masque, en particulier composé d'un matériau résistant aux solvants.

4. Procédé selon l'une des revendications précédentes, sans que les corps soient recuits à une température supérieure à la température ambiante pendant qu'ils sont pressés l'un contre l'autre et/ou après.

5. Procédé selon l'une des revendications précédentes, selon lequel le liquide est préparé dans un récipient apte à être fermé et l'étape b) comprend la disposition du corps en matière plastique au-dessus d'un couvercle qui ferme le récipient, et que l'on ouvre pour la durée prédéfinie.

6. Procédé selon l'une des revendications précédentes, selon lequel l'étape c) consiste à presser l'un contre l'autre le corps en matière plastique et l'autre corps à l'aide d'un élément de pression chacun, l'un au moins des éléments de pression présentant une forme au moins partiellement complémentaire par rapport au corps en matière plastique correspondant ou à l'autre corps correspondant et/ou un creux tel que l'élément de pression n'est appliqué à plat que partiellement sur l'élément en matière plastique correspondant ou sur l'autre corps correspondant.

7. Procédé selon la revendication 6, selon lequel la surface d'au moins un élément de pression qui est tournée vers le corps en matière plastique correspondant ou vers l'autre corps correspondant comprend un matériau d'une dureté Shore A située entre environ 60 et 90.

8. Procédé selon l'une des revendications précédentes, selon lequel la liaison entre le corps en matière plastique et l'autre corps forme une cavité, et l'étape c) comprend, pendant et/ou après la pression mutuelle, un rinçage de la cavité avec un gaz, de préférence grâce à l'action d'une dépression.

9. Procédé selon l'une des revendications précédentes, selon lequel le corps en matière plastique est constitué par un film en matière plastique, et l'étape c) est précédée par un découpage d'une surface prédéfinie du film en matière plastique.
